# EUROPEAN PATENT APPLICATION

(11) **EP 4 796 682 A1**
(43) Date of publication of application: **26.08.2026**
(21) Application number: 24879633.6
(22) Date of filing: 09.10.2024
(51) Int. Cl.: D01F 9/12, C01B 32/158, D01D 5/06

(54) **METHOD FOR PRODUCING CARBON NANOTUBE FIBER, CARBON NANOTUBE SOLIDIFIED BODY PRODUCTION DEVICE, AND SYSTEM FOR PRODUCING CARBON NANOTUBE FIBER**

(30) Priority: 18.10.2023 JP 2023179833
(71) Applicant: Nitto Denko Corporation, Ibaraki-shi Osaka 567-8680 (JP); National University Corporation Nara Institute of Science and Technology, Ikoma-shi, Nara 630-0192 (JP)
(72) Inventor: SUZUKI, Kazuaki, Ibaraki-shi, Osaka 567-8680 (JP); NAKAMURA, Masakazu, Ikoma-shi, Nara 630-0192 (JP); OKAMOTO, Naofumi, Ikoma-shi, Nara 630-0192 (JP)
(74) Representative: Hoffmann Eitle
(86) International application number: PCT/JP2024/036095
(87) International publication number: WO 2025/084208

(57) **Abstract**

A carbon nanotube fiber is produced by using a carbon nanotube solidified body production apparatus. The apparatus includes a tank and a jig. The tank houses a solidifying liquid. The jig has a support plate portion which has a hole opening on an upper surface. The jig is movable between a first position and a second position. The production method includes a step (1), a step (2), and a step (3). In the step (1), a carbon nanotube solidified body is produced by discharging a carbon nanotube dispersion liquid on the support plate portion of the jig located at the first position. In the step (2), by moving the jig from the first position to the second position, the solidifying liquid is ejected from the hole. In the step (3), the carbon nanotube solidified body is dried.

## Description

### TECHNICAL FIELD

The present invention relates to a method for producing a carbon nanotube fiber, a carbon nanotube solidified body production apparatus, and a production system of a carbon nanotube fiber.

### BACKGROUND ART

A method is known in which a carbon nanotube dispersant (CNT dispersant) containing a carbon nanotube (CNT) and a dispersion medium is discharged into a container housing an aggregate solution to produce a spinning CNT, and then, it is dried to produce a CNT spun yarn (ref: for example, Patent Document 1 below).

In the production method described in Patent Document 1, the spinning CNT is pulled up from the aggregate solution, while one end portion of the spinning CNT extending in a longitudinal direction is gripped, and the aggregate solution contained in the spinning CNT and the aggregate solution around it are removed.

### Citation List

### Patent Document

Patent Document 1: WO2018/047882

### SUMMARY OF THE INVENTION

### PROBLEM TO BE SOLVED BY THE INVENTION

However, in the method described in Patent Document 1, when the spinning CNT is pulled up from the aggregate solution, the spinning CNT may be broken by the weight of the aggregate solution.

On the other hand, when the spinning CNT is slowly pulled up in order to suppress the above-described break, production efficiency is lowered.

The present invention provides a method for producing a carbon nanotube fiber, a carbon nanotube solidified body production apparatus, and a production system of a carbon nanotube fiber which suppress a decrease in production efficiency, while suppressing a break of a carbon nanotube solidified body.

### MEANS FOR SOLVING THE PROBLEM

The present invention [1] includes a method for producing a carbon nanotube fiber by using a carbon nanotube solidified body production apparatus producing a carbon nanotube solidified body, wherein the carbon nanotube solidified body production apparatus includes a tank which houses a solidifying liquid, and a jig having a support plate portion and being movable between a first position at which the support plate portion is located in the solidifying liquid and a second position at which the support plate portion is located at an upper side with respect to the solidifying liquid; the support plate portion has a hole opening on an upper surface; and the method for producing a carbon nanotube fiber includes a step (1) of producing the carbon nanotube solidified body by discharging a carbon nanotube dispersion liquid containing a carbon nanotube and a dispersion medium on the support plate portion of the jig located at the first position, a step (2) of moving the jig from the first position to the second position to eject the solidifying liquid on the upper surface of the support plate portion from the hole, and a step (3) of drying the carbon nanotube solidified body.

In this production method, in the step (2), since the solidifying liquid on the upper surface of the support plate portion is ejected from the hole by moving the jig from the first position to the second position, while the carbon nanotube solidified body is supported on the upper surface of the support plate portion, it is possible to suppress a decrease in production efficiency, while suppressing a break of the carbon nanotube solidified body during ejection of the solidifying liquid.

The present invention [2] includes the method for producing a carbon nanotube fiber described in [1], wherein the solidifying liquid contains water.

The present invention [3] includes the method for producing a carbon nanotube fiber described in [1] or [2], wherein an area ratio of the hole on the upper surface of the support plate portion is below 70%.

In this production method, since the area ratio of the hole on the upper surface of the support plate portion is below 70%, in the step (3), the carbon nanotube solidified body can be reliably adhered to the upper surface of the support plate portion. Therefore, it is possible to suppress the break of the carbon nanotube fiber in the step (3).

The present invention [4] includes the method for producing a carbon nanotube fiber described in any one of [1] to [3], wherein a contact angle of the solidifying liquid with respect to the upper surface of the support plate portion is 30 degrees or more and below 100 degrees.

In this production method, since the contact angle of the solidifying liquid with respect to the upper surface of the support plate portion is 30 degrees or more, detachability in collecting the carbon nanotube fiber from the support plate portion is ensured, and it is possible to suppress the break due to the adhesion of the carbon nanotube fiber to the support plate portion.

Since the contact angle of the solidifying liquid with respect to the upper surface of the support plate portion is below 100 degrees, it is possible to improve wettability of the solidifying liquid with respect to the upper surface of the support plate portion, and therefore, the carbon nanotube solidified body can be reliably adhered to the upper surface of the support plate portion. As a result, it is possible to suppress the break due to shrinkage of the carbon nanotube fiber.

The present invention [5] includes the method for producing a carbon nanotube fiber described in any one of [1] to [4], wherein the dispersion medium is hydrophilic.

In this production method, since the dispersion medium is hydrophilic, the solidifying liquid containing water can be used.

The present invention [6] includes the method for producing a carbon nanotube fiber described in any one of [1] to [5], wherein specific gravity of the dispersion medium is above 1.

In this production method, since the specific gravity of the dispersion medium is above 1, when the solidifying liquid contains the water, the carbon nanotube dispersion liquid is submerged in the solidifying liquid, so that moldability of the carbon nanotube solidified body in the step (2) is excellent.

The present invention [7] includes the method for producing a carbon nanotube fiber described in any one of [1] to [6], wherein a content ratio of the carbon nanotube in the carbon nanotube dispersion liquid is 0.3% by mass or more and 2.0% by mass or less.

In this production method, since the content ratio of the carbon nanotube in the carbon nanotube dispersion liquid is 0.3% by mass or more, it is possible to improve strength of the carbon nanotube solidified body, and to suppress the break of the carbon nanotube solidified body.

Since the content ratio of the carbon nanotube in the carbon nanotube dispersion liquid is 2.0% by mass or less, it is possible to thicken the carbon nanotube solidified body, and accordingly, to produce the thick carbon nanotube fiber.

The present invention [8] includes the method for producing a carbon nanotube fiber described in any one of [1] to [7], wherein in the step (1), the carbon nanotube dispersion liquid is discharged from a discharge port, and in the step (1), the support plate portion relatively moves with respect to the discharge port in a direction along the upper surface.

In the step (1), since the support plate portion relatively moves with respect to the discharge port in the direction along the upper surface, folding over in a vertical direction of the carbon nanotube solidified body discharged from the discharge port to the upper surface of the support plate portion is suppressed, and it is possible to produce the long carbon nanotube solidified body.

The present invention [9] includes the method for producing a carbon nanotube fiber described in any one of [1] to [8], wherein the jig includes a recessed portion which opens upward and a bottom plate of the recessed portion is the support plate portion.

In this production method, the carbon nanotube solidified body is reliably housed in the recessed portion. Therefore, it is possible to suppress the decrease in the production efficiency of the carbon nanotube fiber.

The present invention [10] includes the method for producing a carbon nanotube fiber described in any one of [1] to [9], wherein the hole is a through hole penetrating through the support plate portion.

The present invention [11] includes a carbon nanotube solidified body production apparatus for producing a carbon nanotube solidified body, wherein the carbon nanotube solidified body production apparatus includes a tank which houses a solidifying liquid, and a jig having a support plate portion where a carbon nanotube dispersion liquid containing a carbon nanotube and a dispersion medium is discharged and being movable between a first position at which the support plate portion is located in the solidifying liquid and a second position at which the support plate portion is located at an upper side with respect to the solidifying liquid; and the support plate portion has a hole opening on an upper surface.

The present invention [12] includes the carbon nanotube solidified body production apparatus described in [11], wherein an area ratio of the hole on the upper surface of the support plate portion is below 70%.

The present invention [13] includes the carbon nanotube solidified body production apparatus described in [11] or [13] further including a discharge apparatus having a discharge port discharging the carbon nanotube dispersion liquid, wherein the support plate portion is relatively movable with respect to the discharge port in a direction along the upper surface.

The present invention [14] includes the carbon nanotube solidified body production apparatus described in [13], wherein the jig includes a recessed portion which opens upward and a bottom plate of the recessed portion is the support plate portion.

The present invention [15] includes the carbon nanotube solidified body production apparatus described in [13] or [14], wherein the hole is a through hole penetrating through the support plate portion.

The present invention [16] includes a production system of a carbon nanotube fiber including the carbon nanotube solidified body production apparatus described in any one of [13] to [15] and a drying apparatus to dry the carbon nanotube solidified body on the support plate portion.

### EFFECT OF THE INVENTION

The method for producing a carbon nanotube fiber, the carbon nanotube solidified body production apparatus, and the production system of a carbon nanotube fiber of the present invention suppress a decrease in production efficiency, while suppressing a break of a carbon nanotube solidified body.

### BRIEF DESCRIPTION OF THE DRAWINGS

FIGS. 1A to 1C show cross-sectional views of a step for illustrating a method for producing a carbon nanotube fiber:
   FIG. 1A illustrating a step (1),
   FIG. 1B illustrating a step (2), and
   FIG. 1C illustrating a step (3).
FIG. 2 shows a plan view of a carbon nanotube solidified body production apparatus in the step (1) shown in FIG. 1A.
FIG. 3 shows a carbon nanotube solidified body production apparatus of a third modified example.
FIG. 4 shows a carbon nanotube solidified body production apparatus of a fourth modified example.
FIG. 5 shows a plurality of jigs of a fifth modified example in the step (3).
FIG. 6 shows a schematic view of a production system of a carbon nanotube fiber of a sixth modified example.

### DESCRIPTION OF EMBODIMENTS

### 1. Production System 1 of Carbon Nanotube Fiber

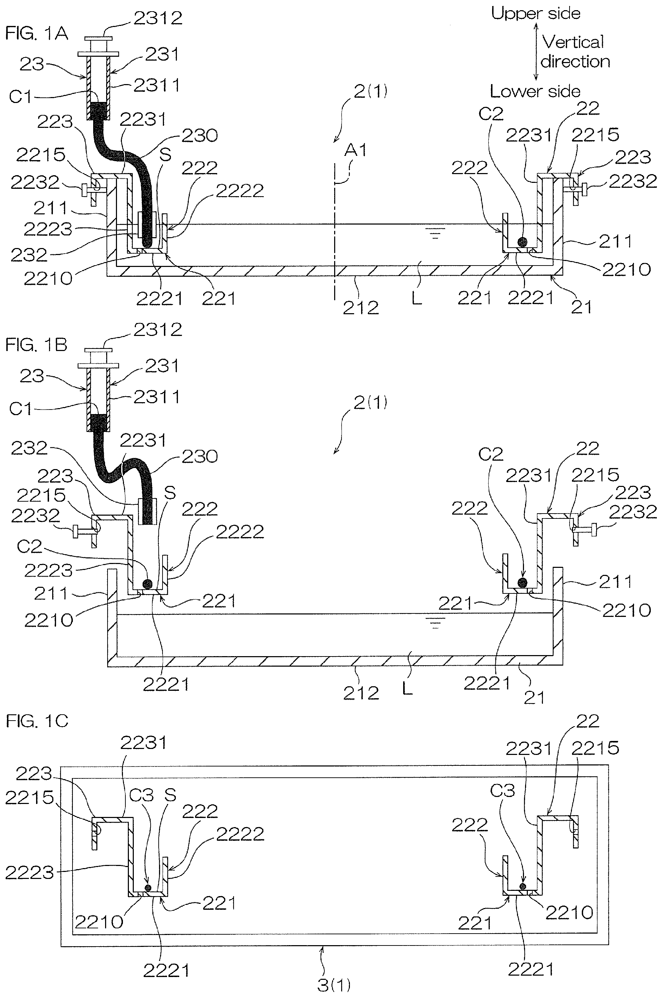

One embodiment of a production system of a carbon nanotube fiber of the present invention is described with reference to FIGS. 1A to 2. A production system 1 of a carbon nanotube fiber C3 is used for production of the carbon nanotube fiber C3. As shown in FIGS. 1A to 1C, the production system 1 of the carbon nanotube fiber C3 (ref: FIG. 1C) includes a carbon nanotube solidified body production apparatus 2 (ref: FIG. 1A) and a drying apparatus 3 (ref: FIG. 1C).

### 1.1 Carbon Nanotube Solidified Body Production Apparatus 2

The carbon nanotube solidified body production apparatus 2 is used for the production of a carbon nanotube solidified body C2. As shown in FIG. 1A, the carbon nanotube solidified body production apparatus 2 includes a tank 21, a jig 22, and a discharge apparatus 23.

### 1.1.1 Tank 21

The tank 21 houses a solidifying liquid L. The solidifying liquid L is described later. The tank 21 has a cylindrical shape having a bottom. The tank 21 has a bottom wall 212 and a peripheral wall 211. The bottom wall 212 extends in a horizontal direction perpendicular to a vertical direction. The bottom wall 212 has a disc shape. The peripheral wall 211 extends upward from a peripheral end of the bottom wall 212. Upper and lower (including an upper end and a lower end) are upper and lower (the upper end and the lower end) in the vertical direction of the figures.

The tank 21 is rotatable. The tank 21 is provided with a rotation apparatus which is not shown. Examples of the rotation apparatus include rotation tables. By driving the rotation apparatus, the tank 21 rotates around an axis A1. The axis A1 extends in the vertical direction through the center of the bottom wall 212. The tank 21 is rotatable around the axis A1.

### 1.1.2 Jig 22

The jig 22 has a ring shape when viewed from the top. The jig 22 has an attachment portion 223 and a recessed portion 222. The jig 22 is disposed in a state of being located at a first position (described later, ref: FIG. 1A) so that the recessed portion 222 is disposed in the tank 21 and the attachment portion 223 is attached to the peripheral wall 211.

The attachment portion 223 is disposed in an upper end portion of the jig 22. The attachment portion 223 has a fixed portion 2231 and a plurality of fixing members 2232. The fixed portion 2231 has a generally U (inverted U) shape in a cross-sectional view which opens downward, and the ring shape when viewed from the top. The fixed portion 2231 is disposed so as to cover the upper end portion of the peripheral wall 211. An outer peripheral wall of the fixed portion 2231 has a plurality of through holes 2215. The plurality of through holes 2215 are spaced apart from each other in a circumferential direction. Each of the plurality of through holes 2215 is threaded.

The fixing member 2232 is, for example, a bolt. Each of the plurality of fixing members 2232 is inserted into each of the plurality of through holes 2215, and is brought into contact with (pressurizes) the peripheral wall 211 of the tank 21, so that the jig 22 is fixed to the tank 21. Therefore, the jig 22 is rotatable along with the tank 21. The jig 22 is rotatable around the axis A1.

The recessed portion 222 opens upward, and is disposed in a lower end portion of the jig 22. The recessed portion 222 is disposed at a lower side of the attachment portion 223. The recessed portion 222 is disposed spaced apart from an inner side of the peripheral wall 211 in a radial direction. The recessed portion 222 has the ring shape when viewed from the top. The recessed portion 222 has a bottom plate 2221, a first wall 2222, and a second wall 2223.

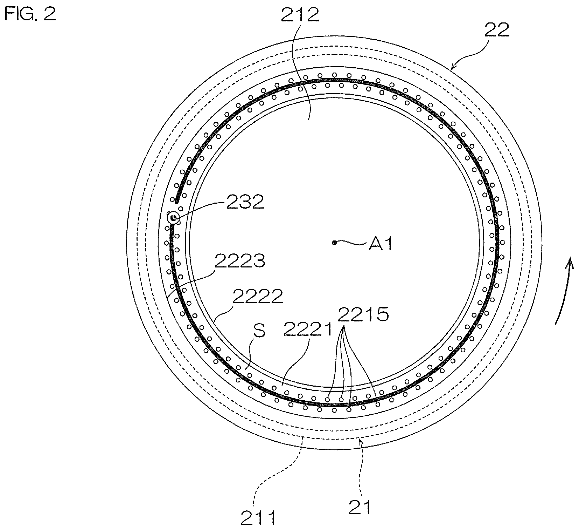

The bottom plate 2221 extends in a direction crossing the vertical direction. In the present embodiment, preferably, the bottom plate 2221 extends in the direction perpendicular to the vertical direction, that is, in the horizontal direction. The bottom plate 2221 has an upper surface S and a lower surface. The bottom plate 2221 is a ring plate. The bottom plate 2221 is a support plate portion 221. That is, the jig 22 has the support plate portion 221. The support plate portion 221 has the upper surface S, and a hole 2210 opening on the upper surface S. Specifically, as shown in FIG. 2, the support plate portion 221 has the plurality of holes 2210.

The plurality of holes 2210 are disposed in alignment spaced apart from each other in the circumferential direction along the upper surface S. The hole 2210 a through hole penetrating through the support plate portion 221. In the present embodiment, the support plate portion 221 is a flat plate in which a punch hole is formed (punching plate). The hole 2210 is, for example, a round hole.

An area ratio of the hole 2210 on the upper surface S of the support plate portion 221 is, for example, 80% or less, preferably 70% or less, more preferably below 70%, further more preferably 65% or less, particularly preferably 55% or less, most preferably 40% or less, and further, preferably 30% or less, 25% or less, or 20% or less. When the area ratio of the hole 2210 on the upper surface S of the support plate portion 221 is below the above-described upper limit, in a step (3) to be described later, the carbon nanotube solidified body C2 can be reliably adhered to the upper surface S of the support plate portion 221. Therefore, it is possible to suppress a break due to shrinkage of the carbon nanotube fiber C3 in the step (3). The lower limit of the area ratio of the hole 2210 on the upper surface S of the support plate portion 221 is, for example, 1% or more, preferably 10% or more. When the area ratio of the hole 2210 on the upper surface S of the support plate portion 221 is the above-described lower limit or more, in a step (2) to be described later, it is possible to improve ejection efficiency of the solidifying liquid L on the upper surface S.

A diameter of the hole 2210 is, for example, 0.5 mm or more, preferably 1 mm or more, more preferably 2 mm or more, and for example, 5 mm or less. A distance between the holes 2210 adjacent to each other is, for example, 2 mm or more, preferably 4 mm or more, more preferably 8 mm or more, and for example, 100 mm or less.

The upper surface S of the support plate portion 221 may be also irradiated with active energy rays. The active energy rays include ultraviolet rays. Preferably, the upper surface S of the support plate portion 221 is not irradiated with the active energy rays. When the upper surface S of the support plate portion 221 is not irradiated with the active energy rays, a contact angle of a carbon nanotube dispersion liquid C1 with respect to the upper surface S of the support plate portion 221 can be set at a desired value.

As shown in FIG. 1A, the first wall 2222 extends upward from an inner peripheral edge of the bottom plate 2221. The first wall 2222 is spaced apart from the peripheral wall 211 in the radial direction. The first wall 2222 has the cylindrical shape.

The second wall 2223 connects an outer peripheral edge of the bottom plate 2221 to the lower end of the fixed portion 2231 of the attachment portion 223 in the vertical (up-down) direction. The second wall 2223 is spaced apart from the peripheral wall 211 in the radial direction. The second wall 2223 is disposed between the peripheral wall 211 and the first wall 2222. The second wall 2223 extends in the vertical direction. The second wall 2223 has the cylindrical shape.

Examples of a material for the jig 22 include metals and resins. Examples of the metal include stainless steel and aluminum. Examples of the resin include polyacrylic resins and polyester resins. An example of the polyacrylic resin includes polymethyl methacrylate (PMMA). An example of the polyester resin includes polyethylene terephthalate (PET). As the material for the jig 22, preferably, stainless steel and PMMA are used in order to set the contact angle of the solidifying liquid L with respect to the upper surface S of the support plate portion 221 at the desired value. As the material for the jig 22, the stainless steel is used, and a PET film may be also attached to the upper surface S of the support plate portion 221. That is, the upper surface S of the support plate portion 221 is the upper surface of the PET film. At this time, the upper surface of the PET film may be also subjected to a surface treatment with silicone.

Then, the jig 22 is movable between the first position (ref: FIG. 1A) and a second position (ref: FIG. 1B).

As shown in FIG. 1A, the support plate portion 221 is located in the solidifying liquid L in a state where the jig 22 is located at the first position. In order to locate the jig 22 at the first position, the fixing member 2232 is tightened with respect to the peripheral wall 211 of the tank 21 at the position where the support plate portion 221 is immersed in the solidifying liquid L. Thus, the jig 22 is fixed to the tank 21, and the jig 22 is rotatable along with the solidifying liquid L and the tank 21.

On the other hand, as shown in FIG. 1B, the support plate portion 221 is located at an upper side with respect to the solidifying liquid L in a state where the jig 22 is located at the second position. In order to locate the jig 22 at the second position, fixing of the jig 22 with respect to the tank 21 is released, and the jig 22 is pulled upward with respect to the tank 21.

### 1.1.3 Discharge Apparatus 23

The discharge apparatus 23 has a liquid housing portion 231, a discharge port 232, and a line 230.

### 1.1.3.1 Liquid Housing Portion 231

The liquid housing portion 231 houses the carbon nanotube dispersion liquid C1. The liquid housing portion 231 is capable of supplying the carbon nanotube dispersion liquid C1 to the discharge port 232. In the present embodiment, the liquid housing portion 231 includes a cylinder 2311 and a piston 2312. The cylinder 2311 houses the carbon nanotube dispersion liquid C1 therein. The piston 2312 is movable within the cylinder 2311.

### 1.1.3.2 Discharge Port 232

The discharge port 232 is disposed at the upper side of the support plate portion 221 (the bottom plate 2221) and at the position overlapped with the support plate portion 221 (the bottom plate 2221) in the vertical direction. The discharge port 232 is relatively movable with respect to the jig 22 in the vertical direction. Therefore, the support plate portion 221 of the jig 22 is relatively movable with respect to the discharge port 232 in the vertical direction.

Further, the discharge port 232 is not movable in the direction crossing the vertical direction. Specifically, the discharge port 232 is not movable in the direction perpendicular to the vertical direction, that is, in the horizontal direction (direction along the upper surface S). Therefore, the above-described support plate portion 221 is relatively movable with respect to the discharge port 232 in the direction along the upper surface S.

Examples of the material for the discharge port 232 include resins and metals. As the material for the discharge port 232, from the viewpoint of processability and cost, preferably, a resin is used. Examples of the resin include fluorine resins. An example of the fluorine resin includes polytetrafluoroethylene (PTFE).

As shown in FIG. 1, in the present embodiment, the discharge port 232 has a circular shape. An inner diameter of the discharge port 232 is, for example, 1 mm or more, preferably 2 mm or more, and for example, 10 mm or less, preferably 8 mm or less.

### 1.1.3.3 Line 230

The line 230 connects a downstream end of the cylinder 2311 in a discharge direction to the discharge port 232. Thus, the discharge port 232 discharges the carbon nanotube dispersion liquid C1 in the cylinder 2311. The line 230 is, for example, a flexible tube. A length of the line 230 is, for example, 1 cm or more and 100 cm or less. A downstream in the discharge direction is the downstream in the discharge direction in which the carbon nanotube dispersion liquid C1 is discharged. An upstream in the discharge direction is the opposite direction to the downstream.

### 1.2 Drying Apparatus 3

The drying apparatus 3 (ref: FIG. 1C) is provided independently from the carbon nanotube solidified body production apparatus 2 (ref: FIG. 1A). Examples of the drying apparatus 3 include ovens.

### 2. Method for Producing Carbon Nanotube Fiber C3

By using the production system 1 of the carbon nanotube fiber C3 described above, a method for producing the carbon nanotube solidified body C2 and the carbon nanotube fiber C3 in order is described.

The method for producing the carbon nanotube fiber C3 includes a step (1), the step (2) and the step (3). In the present embodiment, the step (1), the step (2), and the step (3) are carried out in order. The carbon nanotube solidified body C2 is produced by the step (1).

### 2.1 Step (1)

As shown in FIG. 1A, in the step (1), the carbon nanotube dispersion liquid C1 is discharged on the support plate portion 221 of the jig 22 located at the first position, thereby producing the carbon nanotube solidified body C2.

The carbon nanotube dispersion liquid C1 contains a carbon nanotube and a dispersion medium.

The carbon nanotube has the cylindrical shape. A type and a size of the carbon nanotube are not limited. An example of the type of the carbon nanotube includes a single-walled carbon nanotube. The length of the carbon nanotube is, for example, 0.1 µm or more, preferably 0.2 µm or more, more preferably 0.5 µm or more, and for example, 5 µm or less. The diameter of the carbon nanotube is, for example, 0.5 nm or more, preferably 0.75 nm or more, more preferably 1 nm or more, and for example, 5 nm or less.

A content ratio of the carbon nanotube in the carbon nanotube dispersion liquid C1 is, for example, 0.1% by mass or more, preferably 0.3% by mass or more, more preferably 0.5% by mass or more. When the content ratio of the carbon nanotube in the carbon nanotube dispersion liquid C1 is the above-described lower limit or more, it is possible to improve the strength of the carbon nanotube solidified body C2, and to suppress the break of the carbon nanotube solidified body C2.

The content ratio of the carbon nanotube in the carbon nanotube dispersion liquid C1 is, for example, 3.0% by mass or less, preferably 2.0% by mass or less, more preferably 1.5% by mass or less. When the content ratio of the carbon nanotube in the carbon nanotube dispersion liquid C1 is the above-described upper limit or less, it is possible to thicken the carbon nanotube solidified body C2, and accordingly, to produce the thick carbon nanotube fiber C3.

The dispersion medium disperses the carbon nanotube. The dispersion medium is, for example, hydrophilic. When the dispersion medium is hydrophilic, it is possible to improve dispersibility of the carbon nanotube dispersion liquid C1 in the solidifying liquid containing water. The hydrophilicity is a concept including compatibility and miscibility with the water.

Specific gravity of the dispersion medium is, for example, above 1. When the specific gravity of the dispersion medium is above 1, in a case where the solidifying liquid contains the water, the carbon nanotube dispersion liquid C1 is submerged in the solidifying liquid, so that moldability of the carbon nanotube solidified body C2 in the step (2) is excellent. The specific gravity of the dispersion medium is preferably 1.1 or more, more preferably 1.2 or more, and for example, 1.5 or less.

Viscosity at 25°C of the dispersion medium is preferably 100 mPa·s to 6000 mPa·s, more preferably 500 mPa·s to 3000 mPa·s. When the viscosity of the dispersion medium is within the above-described range, the dispersibility of the carbon nanotube in the carbon nanotube dispersion liquid C1 and orientation of the carbon nanotube in the carbon nanotube fiber C3 are improved.

Examples of the dispersion medium include polyhydric alcohols. Examples of the polyhydric alcohol include dihydric alcohols, trihydric alcohols, and tetrahydric alcohols. Examples of the dihydric alcohol include ethylene glycol and diethylene glycol. An example of the trihydric alcohol includes glycerin. An example of the tetrahydric alcohol includes pentaerythritol. As the polyhydric alcohol, preferably, a trihydric alcohol is used.

The content ratio of the dispersion medium in the carbon nanotube dispersion liquid C1 is, for example, 98.0% by mass or more, preferably 98.5% by mass or more, and for example, 99.9% by mass or less, preferably 99.7% by mass or less, more preferably 99.5% by mass or less.

The carbon nanotube dispersion liquid C1 may also contain an additive. Examples of the additive include dispersants and dopants.

The dispersant improves the dispersibility of the carbon nanotube in the carbon nanotube dispersion liquid C1, and improves the strength and flexibility of the carbon nanotube fiber C3. Examples of the dispersant include sodium carboxymethylcellulose and polyoxyethylene stearyl ether.

Examples of the dopant include P-type dopants and N-type dopants. The P-type dopant imparts an electrical property of a P-type semiconductor to the carbon nanotube fiber C3. The N-type dopant imparts the electrical property of an N-type semiconductor to the carbon nanotube fiber C3. An example of the P-type dopant includes 1-butyl-3-methylimidazolium hexafluorophosphate. An example of the N-type dopant includes triphenylphosphine.

The carbon nanotube and the dispersion medium described above are mixed, thereby preparing the carbon nanotube dispersion liquid C1. At this time, for example, pulverization, dispersion, and cooling are carried out. Specifically, the carbon nanotube is pulverized, and thereafter, while the carbon nanotube is dispersed in the dispersion medium, they are cooled.

The carbon nanotube dispersion liquid C1 is housed in (filled with) the cylinder 2311 of the liquid housing portion 231.

In addition, the solidifying liquid L is housed in the tank 21. The solidifying liquid L contains the water. The solidifying liquid L may also contain an organic solvent in addition to the water. The organic solvent preferably has the hydrophilicity. Examples of the organic solvent include monohydric alcohols. Examples of the monohydric alcohol include methanol, ethanol, and 2-propanol. The content ratio of the water in the solidifying liquid L is, for example, above 50% by mass, preferably 90% by mass or more, and for example, 99% by mass or less. When the organic solvent is contained in the solidifying liquid L, the content ratio of the organic solvent is, for example, below 50% by mass, preferably 10% by mass or less, and for example, 1% by mass or more.

Preferably, the solidifying liquid L does not contain the organic solvent and contains only the water. In other words, the solidifying liquid L is the water. When the solidifying liquid L is the water, it is possible to decrease an environmental burden.

The contact angle of the solidifying liquid L with respect to the upper surface S of the support plate portion 221 is, for example, 15 degrees or more, preferably 30 degrees or more, more preferably 40 degrees or more, further more preferably 50 degrees or more, particularly preferably 60 degrees or more. When the contact angle of the solidifying liquid L with respect to the upper surface S of the support plate portion 221 is the above-described lower limit or more, detachability in collecting the carbon nanotube fiber C3 from the support plate portion 221 is ensured, and it is possible to suppress the break due to the adhesion of the carbon nanotube fiber C3 to the upper surface S of the support plate portion 221.

In order to set the contact angle of the solidifying liquid L with respect to the upper surface S of the support plate portion 221 at the above-described lower limit or more, the above-described irradiation with the activity energy rays is not applied.

The contact angle of the solidifying liquid L with respect to the upper surface S of the support plate portion 221 is, for example, 120 degrees or less, preferably 100 degrees or less, more preferably below 100 degrees, further more preferably 90 degrees or less, particularly preferably 75 degrees or less. When the contact angle of the solidifying liquid L with respect to the upper surface S of the support plate portion 221 is below the above-described upper limit, it is possible to improve wettability of the solidifying liquid L with respect to the upper surface S of the support plate portion 221, and therefore, the carbon nanotube solidified body C2 can be reliably adhered to the upper surface S of the support plate portion 221. As a result, it is possible to suppress the break due to the shrinkage of the carbon nanotube fiber C3.

The method for measuring the contact angle of the solidifying liquid L with respect to the upper surface S of the support plate portion 221 is described in Examples later.

In the step (1), in a state where the jig 22 is located at the first position, the fixing member 2232 is tightened with respect to the peripheral wall 211. Thus, the jig 22 is fixed to the tank 21. In the first position, the solidifying liquid L in the tank 21 may flow into the recessed portion 222 through the hole 2210, or the solidifying liquid L in the tank 21 may be also added to the recessed portion 222. Further, the discharge port 232 is disposed at the lower side of a liquid level of the solidifying liquid L. In the step (1), the upper end of the first wall 2222 is disposed at the upper side of the liquid level of the solidifying liquid L.

When the rotation apparatus is driven, the support plate portion 221 relatively moves with respect to the discharge port 232 in the circumferential direction along the upper surface S. Specifically, the support plate portion 221 rotates with respect to the axis A1. The solidifying liquid L also rotates along with the rotation of the support plate portion 221.

Subsequently, the carbon nanotube dispersion liquid C1 in the liquid housing portion 231 is discharged on the support plate portion 221 in the solidifying liquid L from the discharge port 232. Specifically, in the cylinder 2311, the piston 2312 is pushed into the downstream-side in the discharge direction, and the carbon nanotube dispersion liquid C1 in the cylinder 2311 is discharged from the discharge port 232 through the line 230.

A discharge rate of the carbon nanotube dispersion liquid C1 is, for example, 10 cm/min or more and 100 cm/min or less based on the length conversion of the carbon nanotube solidified body C2.

A peripheral speed of the support plate portion 221 at the discharge port 232 is, for example, 5 mm/min or more, preferably 25 mm/min or more, and for example, 250 mm/min or less, preferably 100 mm/min or less.

When the carbon nanotube dispersion liquid C1 passes through the discharge port 232, shear stress (and shear stress from an inner surface of the line 230) is applied from the inner surface of the discharge port 232, and the carbon nanotube solidified body C2 in which the carbon nanotube is disposed in alignment (orientated) in the longitudinal direction is produced in the carbon nanotube dispersion liquid C1.

As shown in FIG. 2, since the support plate portion 221 relatively moves with respect to the discharge port 232, the carbon nanotube solidified body C2 has the ring shape having an end portion.

Thereafter, if necessary, the carbon nanotube solidified body C2 is left to stand in the solidifying liquid L. Standing time is, for example, one hour or more, preferably 10 hours or more, and for example, 50 hours or less.

### 2.2 Step (2)

As shown in FIG. 1B, in the step (2), by moving the jig 22 from the first position to the second position, the solidifying liquid L of the upper surface S of the support plate portion 221 is ejected from the hole 2210.

Specifically, in the step (2), first, the tightening of the fixing member 2232 with respect to the peripheral wall 211 is relaxed, the fixing member 2232 is separated from the peripheral wall 211, and the fixing of the jig 22 with respect to the tank 21 is released.

Thereafter, the jig 22 is pulled upward. In addition, the discharge port 232 is also pulled upward.

Then, the solidifying liquid L in the recessed portion 222 is ejected downward (falls) through the hole 2210. That is, the solidifying liquid L on the support plate portion 221 is ejected downward (falls) through the hole 2210.

### 2.3 Step (3)

In the step (3), the carbon nanotube solidified body C2 is dried. Specifically, in the step (3), the carbon nanotube solidified body C2 and the jig 22 which supports it are charged into the drying apparatus 3.

Drying conditions are set to the conditions in which the solidifying liquid L is removed from the carbon nanotube solidified body C2 and further, the dispersion medium is removed from the carbon nanotube solidified body C2. The removal of the dispersion medium includes a treatment of obtaining a product by escaping volatile components by thermal decomposition. In a drying step, a temperature can be increased stepwise. A drying temperature is, for example, 50°C or more and 300°C or less. Drying time is, for example, 10 minutes or more and 10 hours or less. When the temperature is increased stepwise from a first heating temperature to a second heating temperature, the first heating temperature is, for example, 50°C or more, preferably 75°C or more, and for example, 110°C or less, preferably 100°C or less. The time at the first heating temperature is, for example, 15 minutes or more and 45 minutes or less. The second heating temperature is, for example, 150°C or more, preferably 200°C or more, and for example, 350°C or less, preferably 300°C or less. The time at the second heating temperature is, for example, one hour or more and five hours or less.

The carbon nanotube fiber C3 is produced by the step (3).

In the present invention, when the break of the carbon nanotube solidified body C2 in the step (2) is suppressed, the break of the carbon nanotube fiber C3 in the step (3) is allowed. Therefore, a ratio of the length of the carbon nanotube fiber C3 to the length of the carbon nanotube solidified body C2 may be, for example, 0.5 or more, preferably 0.55 or more, and for example, below 1.

A degree of orientation of the carbon nanotube in the carbon nanotube fiber C3 is, for example, 10% or more, preferably 20% or more, more preferably 50% or more, and for example, 99% or less. When the degree of orientation of the carbon nanotube in the carbon nanotube fiber C3 is the above-described lower limit or more, electrical conductivity of the carbon nanotube fiber C3 can be increased. The method for measuring the degree of orientation of the carbon nanotube in the carbon nanotube fiber C3 is described in Examples later.

The electrical conductivity of the carbon nanotube fiber C3 is, for example, 100 S/cm or more, preferably 110 S/cm or more, more preferably 120 S/cm or more, further more preferably 200 S/cm or more, particularly preferably 250 S/cm or more, and for example, 300 S/cm or less. When the electrical conductivity of the carbon nanotube fiber C3 is the above-described lower limit or more, the carbon nanotube fiber C3 has the excellent electrical conductivity. The method for measuring the electrical conductivity of the carbon nanotube fiber C3 is described in Examples later.

A Seebeck coefficient of the carbon nanotube fiber C3 is, for example, 40 µV/K or more, preferably 50 µV/K or more, and for example, 100 µV/K or less. When the Seebeck coefficient of the carbon nanotube fiber C3 is the above-described lower limit or more, in a case where the carbon nanotube fiber C3 is used in a thermoelectric element, thermoelectric efficiency is excellent. The method for measuring the Seebeck coefficient of the carbon nanotube fiber C3 is described in Examples later.

### 3. Applications of Carbon Nanotube Fiber C3 (Thermoelectric Element, Thermoelectric Conversion Module)

The carbon nanotube fiber C3 is, for example, used as the thermoelectric element. The thermoelectric element is provided in a thermoelectric conversion module. In the thermoelectric conversion module, electricity of the thermoelectric element is generated by a thermal change, or the electricity is input into the thermoelectric element to cool the thermoelectric element or generate heat of the thermoelectric element.

### 4. Function and Effect of One Embodiment

In this production method, in the step (2), since the solidifying liquid L on the upper surface S of the support plate portion 221 is ejected from the hole 2210 by moving the jig 22 from the first position to the second position, while the carbon nanotube solidified body C2 is supported on the upper surface S of the support plate portion 221, it is possible to suppress the decrease in the production efficiency of the carbon nanotube fiber C3, while suppressing the break of the carbon nanotube solidified body C2 during ejection of the solidifying liquid L.

In this production method, when the area ratio of the hole 2210 on the upper surface S of the support plate portion 221 is below 70%, in the step (3), the carbon nanotube solidified body C2 can be reliably adhered to the upper surface S of the support plate portion 221. Therefore, it is possible to suppress the break due to the shrinkage of the carbon nanotube fiber C3 in the step (3).

In this production method, when the contact angle of the solidifying liquid L with respect to the upper surface S of the support plate portion 221 is 30 degrees or more, the detachability in collecting the carbon nanotube fiber C3 from the upper surface S of the support plate portion 221 is ensured, and it is possible to suppress the break due to the adhesion of the carbon nanotube fiber C3 to the upper surface S of the support plate portion 221.

When the contact angle of the solidifying liquid L with respect to the upper surface S of the support plate portion 221 is below 100 degrees, it is possible to improve the wettability of the solidifying liquid L with respect to the upper surface S of the support plate portion 221, and therefore, the carbon nanotube solidified body C2 can be reliably adhered to the upper surface S of the support plate portion 221. As a result, it is possible to suppress the break due to the shrinkage of the carbon nanotube fiber C3.

Further, in the step (1) of this production method, since the support plate portion 221 relatively moves with respect to the discharge port 232 in the circumferential direction along the upper surface S, folding over of the carbon nanotube solidified body C2 discharged from the discharge port 232 to the upper surface S of the support plate portion 221 is suppressed, and it is possible to produce the long carbon nanotube solidified body C2.

In this production method, the carbon nanotube solidified body C2 is reliably housed in the recessed portion 222. Therefore, it is possible to suppress the decrease in the production efficiency of the carbon nanotube fiber C3.

### 5. Modified Examples

In each modified example, the same reference numerals are provided for members and steps corresponding to each of those in one embodiment, and their detailed description is omitted. Further, each modified example can achieve the same function and effect as that of one embodiment unless otherwise specified. Furthermore, one embodiment and each modified example can be appropriately used in combination.

### 5.1 First Modified Example

The support plate portion 221 may be also a mesh (net). The mesh has the plurality of holes 2210. When the hole 2210 is the mesh, an opening size thereof is, for example, 50 µm or more, preferably 75 µm or more, more preferably 100 µm or more, and for example, 1200 µm or less.

### 5.2 Second and Third Modified Examples

The jig 22 may also have the plurality of recessed portions 222.

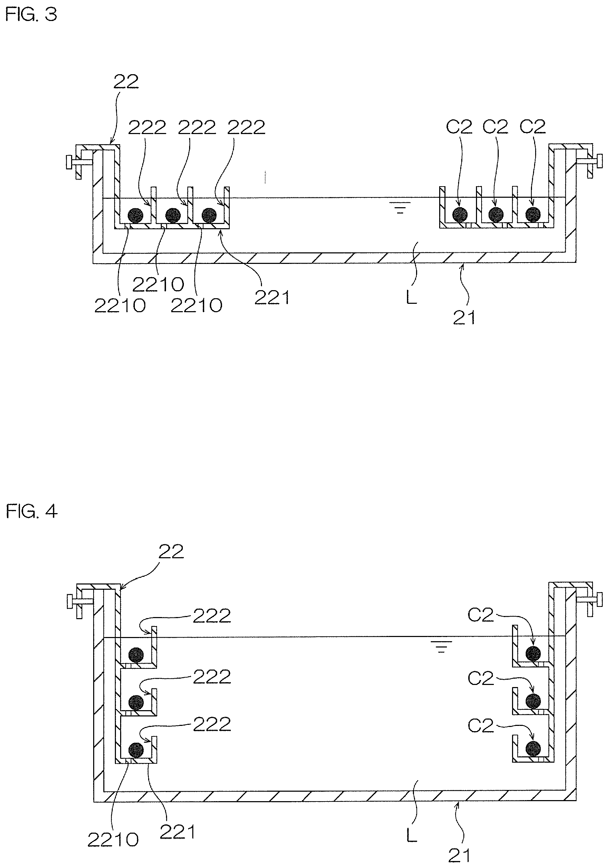

As shown in FIG. 3, in a second modified example, the plurality of recessed portions 222 are disposed in order in the radial direction of the jig 22.

As shown in FIG. 4, in a third modified example, the plurality of recessed portions 222 are disposed in order in the vertical direction (the up-down direction).

### 5.3 Fourth Modified Example

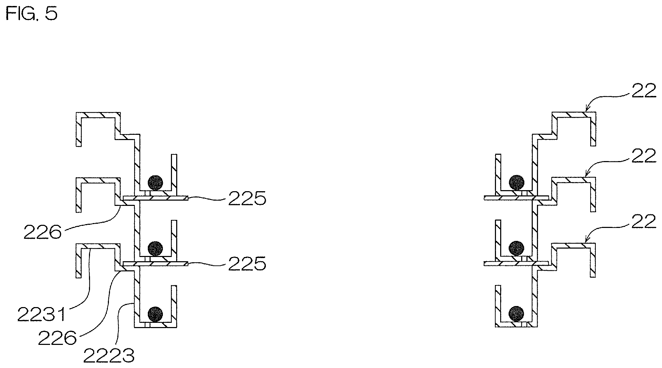

As shown in FIG. 5, in the step (3), an auxiliary plate 225 and a placement plate 226 may be also provided in the jig 22.

The auxiliary plate 225 is disposed on the lower surface of the support plate portion 221. The auxiliary plate 225 has generally the ring shape when viewed from the top, extending along the circumferential direction of the upper surface S.

The placement plate 226 is disposed between a second wall 2223 and a fixed portion 2231. The placement plate 226 extends from the upper end of the second wall 2223 in the horizontal direction (the radial direction).

In the step (3), one auxiliary plate 225 is placed on the upper surface of the other placement plate 226.

### 5.4 Fifth Modified Example

In a fifth modified example shown in FIG. 5, when the upper surface S of the support plate portion 221 opens, the hole 2210 may not be the through hole, and for example, one end opens on the upper surface S and the other end may be also connected to a suction port of an ejection pump (not shown).

### 5.5 Sixth Modified Example

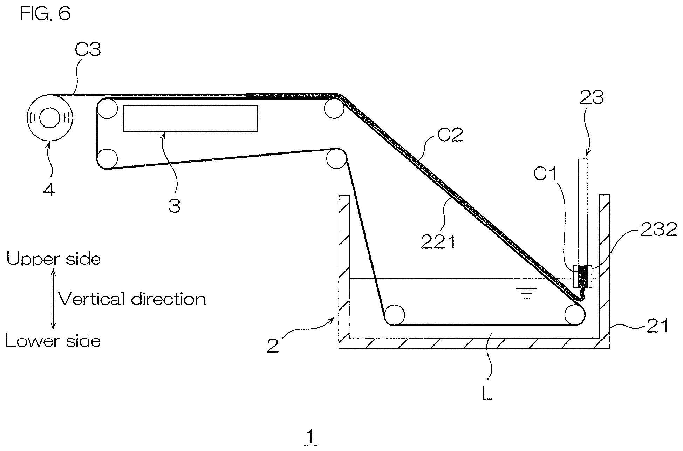

In the production system 1 of the carbon nanotube fiber of a sixth modified example shown in FIG. 6, the carbon nanotube solidified body C2 and the carbon nanotube fiber C3 are continuously produced. The production system 1 of the carbon nanotube fiber includes a collecting portion 4 in addition to the carbon nanotube solidified body production apparatus 2 and the drying apparatus 3 described above.

The support plate portion 221 is a conveyor 26. The conveyor 26 is provided with the hole 2210 (not shown). The plurality of holes 2210 are provided along a conveyance direction of the carbon nanotube solidified body C2. In the conveyance direction, the direction in which the conveyor 26 proceeds is the downstream of the conveyance direction, and the opposite direction thereto is the upstream of the conveyance direction.

The drying apparatus 3 is disposed on the downstream side in the conveyance direction with respect to the carbon nanotube solidified body production apparatus 2. The drying apparatus 3 dries the carbon nanotube solidified body C2 conveyed by the conveyor 26, for example, in hot air.

The collecting portion 4 is disposed at the downstream side in the conveyance direction with respect to the drying apparatus 3. The collecting portion 4 collects the carbon nanotube fiber C3 dried in the drying apparatus 3. The collecting portion 4 is, for example, a winding roll.

### 5.6 Seventh Modified Example

The carbon nanotube solidified body production apparatus 2 may also further include a lifting mechanism capable of moving up and down the jig 22 in the vertical direction (the up-down direction) (not shown). The lifting mechanism is not particularly limited. Examples of the lifting mechanism include ball screw mechanisms, rack and pinion mechanisms, cam mechanisms, spring mechanisms, and hydraulic mechanisms.

### Examples

The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS". All designations of "part" or "parts" and "%" mean part or parts by mass and % by mass, respectively, unless otherwise particularly specified.

The details of raw materials and apparatuses are described below.
Carbon nanotube: TUBALL (01RW02) manufactured by OCSiAl, length of 4 µm or less, diameter of 1.6 nm or less
Glycerin: special class, manufactured by FUJIFILM Wako Pure Chemical Corporation
Mixer: Film Mix FM-40, manufactured by PRIMIX Corporation
Discharge apparatus 23: including the cylinder 2311, the piston 2312, the discharge port 232, and the line 230 (length of 15 cm).
Discharge port 232: material of PTFE and inner diameter of 4 mm
Discharge rate: 55 cm/min
Solidifying liquid L: water
Support plate portion 221 of the jig 22: flat plate having the plurality of punch holes 2210 (through holes). The area ratio of the hole 2210 on the upper surface S of the support plate portion 221, that is, an opening ratio was 16%. The hole 2210 had the circular shape, the diameter of 3 mm, and the distance between the holes 2210 adjacent to each other of 10 mm.
Stainless steel: SUS304
PMMA: methyl polyacrylate
PET: polyethylene terephthalate

### Example 1

### Step (1):

The carbon nanotube was added to the glycerin and mixed in a mortar for three minutes. The content ratio of the carbon nanotube in the mixture was 1% by mass. Subsequently, the mixture was dispersed with a mixer at the peripheral speed of 10 m/s for one minute, while being cooled at the temperature of 5°C. Thus, the carbon nanotube dispersion liquid C1 was prepared.

Separately, the tank 21 to which the jig 22 was fixed was placed on the rotation table, and the solidifying liquid L was added to the tank 21. The upper surface S of the support plate portion 221 of the jig 22 was located at the lower side of the liquid level of the solidifying liquid L (the first position). At the first position, the recessed portion 222 was filled with the solidifying liquid L through the hole 2210.

The discharge port 232 was immersed in the solidifying liquid L, while the rotation table was driven, and the carbon nanotube dispersion liquid C1 was discharged from the discharge port 232 (step (1)).

A rotation rate of the rotation table was about 0.7 rpm, and the discharge port 232 was disposed at the position about 12.5 cm away from the axis A1 outside in the radial direction. Therefore, the rotation rate (peripheral speed) of the support plate portion 221 at the discharge port 232 was 55 mm/min.

Thus, the carbon nanotube solidified body C2 was produced. Thereafter, the carbon nanotube solidified body C2 was left to stand in the solidifying liquid L for 24 hours.

### Step (2):

The jig 22 was pulled upward, and the support plate portion 221 was located at the upper side with respect to the solidifying liquid L (the second position). The solidifying liquid L on the upper surface S of the support plate portion 221 was ejected from the hole 2210.

The jig 22 and the carbon nanotube solidified body C2 were heated in the oven (the drying apparatus 3) at 80°C (the first heating temperature) for 30 minutes, and subsequently, put into the oven at 250°C (the second heating temperature) for four hours, thereby removing the solidifying liquid L and the glycerin (dispersion medium) which remained in the carbon nanotube fiber C3. The diameter of the carbon nanotube fiber C3 was 701 µm.

### Examples 2 to 10 and Comparative Examples 1 and 2

The carbon nanotube fiber C3 was produced in the same manner as in Example 1. However, the conditions were changed in accordance with the descriptions of Table 1.

The support plate portions 221 of Examples 2 to 5 were the mesh. The opening size of the hole 2210 of Example 2 was 154 µm. The opening size of the hole 2210 of Example 3 was 303 µm. The opening size of the hole 2210 of Example 4 was 495 µm. The opening size of the hole 2210 of Example 5 was 1080 µm.

Further, in Example 10, the PET film whose upper surface was subjected to the surface treatment with the silicone was attached to the upper surface S of the support plate portion 221 (stainless steel) of Example 1, thereby preparing the support plate portion 221. The plurality of punch holes 2210 (through holes) were also formed in the PET film.

In Comparative Example 1, the support plate portion 221 of the jig 22 was the flat plate without having the hole 2210. In Comparative Example 1, in the step (2), the ejection of the solidifying liquid L was insufficient. Therefore, it was impossible to produce the carbon nanotube fiber C3.

In the step (2) of Comparative Example 2, one end portion of the carbon nanotube fiber C3 was gripped and pulled up at the rate of 1.5 m/min without using the jig 22. However, the carbon nanotube solidified body C2 was broken. Therefore, it was impossible to produce the carbon nanotube fiber C3.

### (Evaluation)

The following items were evaluated. The results are shown in Table 1.

### <Contact Angle>

The contact angle of the solidifying liquid L (water) with respect to the upper surface S of each of the support plate portions 221 of Examples and Comparative Examples was determined based on following equipment (instruments), methods, and theories. As for Example 10, the contact angle of the solidifying liquid L (water) with respect to the PET film disposed on the upper surface S of the support plate portion 221 was determined.
Contact angle meter: manufactured by AZUMI GIKEN, Limited, equipment model: "B100"
Measurement method: static contact angle measurement, drop method
Theory of computation: Owens-Wendt

### <Measurement of Ratio of Length of Carbon Nanotube Fiber C3 To Length of Carbon Nanotube Solidified Body C2>

The ratio of the length of each of the carbon nanotube fibers C3 to the length of each of the carbon nanotube solidified bodies C2 of Examples and Comparative Examples was measured.

The length of the carbon nanotube solidified body C2 was one circumference from the position 12.5 cm away from the central axis outside in the radial direction, that is, 78.5 cm (25 cm× π) corresponding to the circumference of a circle having the diameter of 25 cm.

The length of the carbon nanotube fiber C3 was the total length of the carbon nanotube fiber C3 when the plurality of carbon nanotube fibers C3 were produced.

### <Degree of Orientation of Carbon Nanotube>

In Examples and Comparative Examples, each of the carbon nanotube fibers C3 was XRD analyzed by Nano Viewer manufactured by Rigaku Corporation. A half-value width of each peak of a β profile obtained by the XRD analysis was calculated by a wave-form separation, and the degree of orientation of the carbon nanotube was calculated by the following formula. $Degree of orientation \left[%\right] = \left(360-\left(sum of half-value width of peak\right)\right) / 360 \times 100$

### <Diameter of Carbon Nanotube Fiber C3>

In Examples and Comparative Examples, each of the carbon nanotube fibers C3 was photographed from outside in the radial direction using a microscope manufactured by KEYENCE CORPORATION, thereby measuring the diameter of the carbon nanotube fiber C3. The measurement was carried at nine sites in different positions in the longitudinal direction, and average values were obtained.

When a cross-section of the carbon nanotube fiber C3 was elliptical, a short axis and a long axis in the cut cross-section were measured, and the average values of them were obtained.

### <Measurement Method of Resistance Value, Seebeck Coefficient, and Electrical Conductivity>

In Examples and Comparative Examples, the resistance value, the electrical conductivity, and Seebeck coefficient of each of the carbon nanotube fibers C3 were measured with a thermoelectric property evaluation device (ZEM-3 (M8/L)) manufactured by ADVANCE RIKO, Inc. The distance between probes was 6 mm. The measurement was carried out under an air atmosphere. The diameter of the carbon nanotube fiber C3 was input into the thermoelectric property evaluation device, and the electrical conductivity was calculated by the thermoelectric property evaluation device.

### [Table 1]

**Table 1**

| | | Ex. 1 | Ex. 2 | Ex. 3 | Ex. 4 | Ex. 5 | Ex. 6 | Ex. 7 | Ex. 8 | Ex. 9 | Ex. 10 | Comp. Ex. 1 | Comp. Ex. 2 |
|---|---|---|---|---|---|---|---|---|---|---|---|---|---|
| Jig | Type | Stainless Steel Plate | Stainless Steel Plate | Stainless Steel Plate | Stainless Steel Plate | Stainless Steel Plate | Aluminum Plate | PMMA Plate | Stainless Steel Plate^{*5} | Stainless Steel Plate^{*6} | PET Plate^{*7} | Stainless Steel Plate | Pulling Up from One End Portion of Carbon Nanotube Solidified Body |
| | Contact Angle of Carbon Nanotube to Upper Surface of Support Plate Portion [degree] | 71 | 71 | 71 | 71 | 71 | 80 | 64 | 37 | 29 | 100 | 71 | |
| | Structure of Support Plate Portion | Flat Plate Having Punch Porc | Mesh^{*1} | Mesh^{*2} | Mesh^{*3} | Mesh^{*4} | Flat Plate Having Punch Porc | Flat Plate Having Punch Pore | Flat Plate Having Punch Pore | Flat Plate Having Punch Pore | Flat Plate Having Punch Porc | Flat Plate (No Pore) | |
| | Area Ratio of Pore on Support Plate Portion [%] | 16 | 37 | 51 | 61 | 71 | 16 | 16 | 16 | 16 | 16 | 0 | |
| Carbon Nanotube Fiber | Ratio of Length of Carbon Nanotube Fiber to Length of Carbon Nanotube Solidified Body | 1 | 1 | 1 | 1 | 0.55^{*8} | 1 | 1 | 1 | 1 | 0.51 | Production Impossible (Insufficien cy of Ejection of Solidifying Liquid) | **Production** Impossible (Break during Pulling up) |
| | Degree of Orientation of Carbon Nanotube [%] | 59 | 59 | 55 | 61 | 23 | 55 | 55 | 52 | 54 | 19 | | |
| | Resistance Per Length of 6 mm [Ω] | 0.15 | 0.14 | 0.15 | 0.16 | 0.16 | 0.17 | 0.16 | 0.14 | 0.16 | 0.37 | | |
| | Diameter [µm] | 701 | 672 | 689 | 709 | 981 | 690 | 725 | 711 | 690 | 682 | | |
| | Electrical Conductivity [S/cm] | 264 | 308 | 270 | 234 | 121 | 240 | 232 | 269 | 255 | 110 | | |
| | Seebeck Coefficient [µV/K] | 53 | 49 | 53 | 52 | 49 | 51 | 53 | 50 | 52 | 55 | | |

| | | | | | | | | | | | | | |
|---|---|---|---|---|---|---|---|---|---|---|---|---|---|
| *1: opening size of 154 µm, *2: opening size of 303 µm, *3: opening size of 495 µm, *4: opening size of 1080 µm, *5: UV irradiation to upper surface of 1.5 min., *6: UV irradiation to upper surface of 4.0 min., *7: silicone treatment to upper surface, *8: due to shrinkage | | | | | | | | | | | | | |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### INDUSTRIAL APPLICATION

The method for producing a carbon nanotube fiber, the carbon nanotube solidified body production apparatus, and the production system of a carbon nanotube fiber of the present invention can suppress a decrease in production efficiency, while suppressing a break of a carbon nanotube solidified body. The carbon nanotube fiber produced by using the method for producing a carbon nanotube fiber of the present invention, and the carbon nanotube fiber produced by using the carbon nanotube solidified body production apparatus of the present invention, and/or the production system of a carbon nanotube fiber of the present invention are preferably used for lightweight wire harnesses, coil yarns, biopotential electrodes, CNT cloth, and carbon fibers.

### Description of Reference Numerals

- 1: Production system of carbon nanotube fiber
- 2: Carbon nanotube solidified body production apparatus
- 3: Drying apparatus
- 21: Tank
- 22: Jig
- 221: Support plate portion
- 2210: Hole
- 222: Recessed portion
- 2221: Bottom plate
- 2215: Through hole
- 23: discharge apparatus
- 230: Line
- 232: Discharge port
- C1: Carbon nanotube dispersion liquid
- C2: Carbon nanotube solidified body
- C3: Carbon nanotube fiber
- L: Solidifying liquid
- S: Upper surface (of support plate portion)

## Claims

1. A method for producing a carbon nanotube fiber by using a carbon nanotube solidified body production apparatus producing a carbon nanotube solidified body, wherein
the carbon nanotube solidified body production apparatus includes
a tank which houses a solidifying liquid, and
a jig having a support plate portion and being movable between a first position at which the support plate portion is located in the solidifying liquid and a second position at which the support plate portion is located at an upper side with respect to the solidifying liquid;
the support plate portion has a hole opening on an upper surface; and
the method for producing a carbon nanotube fiber includes
a step (1) of producing the carbon nanotube solidified body by discharging a carbon nanotube dispersion liquid containing a carbon nanotube and a dispersion medium on the support plate portion of the jig located at the first position,
a step (2) of moving the jig from the first position to the second position to eject the solidifying liquid on the upper surface of the support plate portion from the hole, and
a step (3) of drying the carbon nanotube solidified body.

2. The method for producing a carbon nanotube fiber according to claim 1, wherein
the solidifying liquid contains water.

3. The method for producing a carbon nanotube fiber according to claim 1, wherein
an area ratio of the hole on the upper surface of the support plate portion is below 70%.

4. The method for producing a carbon nanotube fiber according to claim 1, wherein
a contact angle of the solidifying liquid with respect to the upper surface of the support plate portion is 30 degrees or more and below 100 degrees.

5. The method for producing a carbon nanotube fiber according to claim 1, wherein
the dispersion medium is hydrophilic.

6. The method for producing a carbon nanotube fiber according to claim 1, wherein
specific gravity of the dispersion medium is above 1.

7. The method for producing a carbon nanotube fiber according to claim 1, wherein
a content ratio of the carbon nanotube in the carbon nanotube dispersion liquid is 0.3% by mass or more and 2.0% by mass or less.

8. The method for producing a carbon nanotube fiber according to claim 1, wherein
in the step (1), the carbon nanotube dispersion liquid is discharged from a discharge port, and
in the step (1), the support plate portion relatively moves with respect to the discharge port in a direction along the upper surface.

9. The method for producing a carbon nanotube fiber according to claim 1, wherein
the jig includes a recessed portion which opens upward and
a bottom plate of the recessed portion is the support plate portion.

10. The method for producing a carbon nanotube fiber according to claim 1, wherein
the hole is a through hole penetrating through the support plate portion.

11. A carbon nanotube solidified body production apparatus for producing a carbon nanotube solidified body, wherein
the carbon nanotube solidified body production apparatus includes
a tank which houses a solidifying liquid, and
a jig having a support plate portion where a carbon nanotube dispersion liquid containing a carbon nanotube and a dispersion medium is discharged and being movable between a first position at which the support plate portion is located in the solidifying liquid and a second position at which the support plate portion is located at an upper side with respect to the solidifying liquid; and
the support plate portion has a hole opening on an upper surface.

12. The carbon nanotube solidified body production apparatus according to claim 11, wherein
an area ratio of the hole on the upper surface of the support plate portion is below 70%.

13. The carbon nanotube solidified body production apparatus according to claim 11 further comprising:
a discharge apparatus having a discharge port discharging the carbon nanotube dispersion liquid, wherein
the support plate portion is relatively movable with respect to the discharge port in a direction along the upper surface.

14. The carbon nanotube solidified body production apparatus according to claim 13, wherein
the jig includes a recessed portion which opens upward and
a bottom plate of the recessed portion is the support plate portion.

15. The carbon nanotube solidified body production apparatus according to claim 13, wherein
the hole is a through hole penetrating through the support plate portion.

16. A production system of a carbon nanotube fiber comprising:
the carbon nanotube solidified body production apparatus according to claim 13 or 14 and
a drying apparatus to dry the carbon nanotube solidified body on the support plate portion.
